# EUROPÄISCHE PATENTANMELDUNG

(11) **EP 3 208 672 A1**
(43) Veröffentlichungstag der Anmeldung: **23.08.2017**
(21) Anmeldenummer: 16156703.7
(22) Anmeldetag: 22.02.2016
(51) Int. Cl.: G05B 19/042, G05B 23/02

(54) **REGELKREISSYSTEM UND VERFAHREN ZU DESSEN BETRIEB**

(71) Anmelder: Airbus Defence and Space GmbH, 85521 Ottobrunn (DE)
(72) Erfinder: Knobling, Rafael, 81475 München (DE); Bauer, Karin, 82041 Oberhaching (DE); Kupke, Winfried, 85521 Ottobrunn (DE)
(74) Vertreter: Isarpatent

(57) **Zusammenfassung**

Die Erfindung betrifft ein Regelkreissystem (1) zur Beeinflussung wenigstens einer Prozessgröße, mit einer Mehrzahl von Sensoren (11a, 11b), die jeweils zumindest eine Messgröße erfassen, mit einer Mehrzahl von Aktoren (12), die jeweils wenigstens eine Stellgröße manipulieren, wobei den Sensoren (11a, 11b) und Aktoren (12) jeweils elektronische Schaltkreise zur Ansteuerung zugeordnet sind, sowie mit wenigstens einem Steuermittel, welches mit wenigstens einer Steuereinheit (20) die Mehrzahl von Sensoren (11a, 11b) und Aktoren (12) jeweils ansteuert und/oder koordiniert. Um bei einer Regelstrecke mit mehreren Sensoren (11a, 11b) und Aktoren (12), wie sie zur Strömungsregelung eingesetzt wird, Zuverlässigkeit und Belastbarkeit zu steigern, die allgemeine Komplexität zu vermindern und die Instandhaltung zu erleichtern, wird vorgeschlagen, das Regelkreissystem (1) in eine Mehrzahl von Untereinheiten (10) zu gliedern, die jeweils mit wenigstens einem Sensor (11a, 11b), wenigstens einem Aktor (12) und wenigstens einer Steuereinheit (20) versehen sind, und dass eine Mehrzahl der Untereinheiten (10), insbesondere jede der Untereinheiten (10) dazu eingerichtet ist, ein Regelkreissystem (1) zu betreiben.

## Beschreibung

Die Erfindung betrifft ein Regelkreissystem zur Beeinflussung wenigstens einer Prozessgröße, mit einer Mehrzahl von Sensoren, die jeweils zumindest eine Messgröße erfassen, mit einer Mehrzahl von Aktoren, die jeweils wenigstens eine Stellgröße manipulieren, wobei den Sensoren und Aktoren jeweils elektronische Schaltkreise zur Ansteuerung zugeordnet sind, sowie mit wenigstens einem Steuermittel, welches mit wenigstens einer Steuereinheit die Mehrzahl von Sensoren und Aktoren jeweils ansteuert und/oder koordiniert. Außerdem betrifft die Erfindung auch ein Verfahren zum Betrieb eines solchen Regelkreissystems.

Gegenwärtige Regelkreissysteme, insbesondere in der Luftfahrt eingesetzte Sensor/Aktor-basierte Systeme, sind entweder auf einen bestimmten Typ von Regelkreisen für ein spezifisches Problem oder auf die hierarchische Anwendung mehrerer Untereinheiten in einem Gesamtsystem spezialisiert.

Es ist die Aufgabe der vorliegenden Erfindung, bei einer Regelstrecke mit mehreren Sensoren und Aktoren, wie sie zur Strömungsregelung eingesetzt wird, Zuverlässigkeit und Belastbarkeit zu steigern, die allgemeine Komplexität zu vermindern und die Instandhaltung zu erleichtern.

Diese Aufgabe wird gelöst bei einem Regelkreissystem der eingangs genannten Art, bei dem das Regelkreissystem in eine Mehrzahl von Untereinheiten aufgegliedert ist, die jeweils mit wenigstens einem Sensor, wenigstens einem Aktor und wenigstens einer Steuereinheit versehen sind, und dass eine Mehrzahl der Untereinheiten, insbesondere jede der Untereinheiten dazu eingerichtet ist, ein Regelkreissystem zu betreiben.

Bei dem erfindungsgemäßen Regelkreissystem besteht die Lösung der Aufgabe also im Wesentlichen darin, eine flache Hierarchie von gleich wichtigen Regelkreiseinheiten zu etablieren, aus denen das Komplettsystem aufgebaut ist. Auf diese Art und wese wird zum einen die Abhängigkeit von einer Zentralsteuereinheit vermindert, außerdem aber auch eine einfachere Skalierung und Instandhaltung für Luftfahrtanwendungen erreicht. Die erwähnten Regelkreiseinheiten werden durch die Untereinheiten gebildet, die selbst in der Lage sind, Aufgaben eines Regelkreises teilweise oder ganz zu übernehmen und dabei insbesondere einen oder mehrere anderer Untereinheiten zu manipulieren, indem beispielsweise deren Parametersatz angepasst wird. In der Regel werden dabei die Sensoren eine identische Messgröße erfassen, beispielsweise eine Strömungsgeschwindigkeit, es ist aber auch denkbar, dass von verschiedenen Sensoren unterschiedliche Messgröße erfasst werden. Gleichermaßen lassen sich durch die Mehrzahl von Aktoren natürlich auch unterschiedliche Stellgrößen manipulieren.

Den Untereinheiten wird die Möglichkeit gegeben, autonom zu arbeiten, dies jedoch in koordinierter Art und Weise. Für den Fall, dass eine Untereinheit des Systems einen Funktionsausfall erleidet, kann deren Funktion durch die benachbarten Untersysteme übernommen werden. Dies führt zu mehr Flexibilität und Belastbarkeit in der Anwendung durch lokale Autonomie und die Einrichtung eines kooperativen Multiagentensystems.

Eine vorteilhafte Ausführung des erfindungsgemäßen Regelkreissystems kann darin bestehen, alle Sensoren, Aktoren und Steuereinheiten des Regelkreissystems auf Untereinheiten zu verteilen, so dass das betreffende Regelkreissystem vollständig durch eine Mehrzahl im Wesentlichen autonomer Untereinheiten gebildet ist. Vorstellbar ist allerdings auch, dass nur ein Teil der Sensoren und Aktoren mir Steuereinheiten zu Untereinheiten gegliedert sind, während z.B. bestimmte, etwa räumlich regelmäßig oder unregelmäßig voneinander beabstandete, nicht unmittelbar benachbarte Sensoren und Aktoren von einer Art zentralen Steuereinheit des Steuermittels ansteuerbar bleiben. Je nach Betrachtungsweise lässt sich aber auch diese als Untereinheit des Regelkreissystems ansehen.

Besonders flexibel wird das erfindungsgemäße Regelkreissystem, wenn sämtliche der Untereinheiten identisch ausgelegt sind.

Zu Erfassung einer Messgröße des jeweiligen Systems, etwa einer Messgröße zur Beurteilung einer Strömung, wie etwa einer Strömungsgeschwindigkeit, kann eine vorteilhafte Ausführung des erfindungsgemäßen Regelkreissystems mit einer Mehrzahl identischer Untereinheiten versehen sein, die insbesondere in Art einer zwei- oder dreidimensionalen Matrix angeordnet sind, so dass die lokalen Verhältnisse des Messgröße in einer Ebene bzw. im Raum gut erfassbar und in der Folge manipulierbar sind.

Eine gute Ortsauflösung der Messgröße lässt sich beispielsweise mit einer zweckmäßigen Weiterbildung des erfindungsgemäßen Regelkreissystems erzielen, bei der eine Untereinheit mit zwei Sensoren, einem Aktor und einer Steuereinheit versehen ist. Hierbei kann vorteilhafter Weise der Aktor räumlich zwischen den beiden Sensoren angeordnet sein, so dass die Änderung der Messgröße über den Querschnitt der Untereinheit gegebenenfalls entweder eine Aussage über deren zeitliche Entwicklung oder über die Wirkung einer Betätigung des Aktors, dem der zweiter Sensor sozusagen nachgeschaltet ist, gestattet. Hierzu kann die Untereinheit bevorzugt so angeordnet werden, dass in einer Strömung zunächst der erste und anschließend der zweite Sensor angeströmt wird. Hierfür kann überdies in einer bevorzugten Weiterbildung eine Untereinheit jeweils wenigstens eine Sensor-Aktor-Anordnung aufweisen, die eine ebene, plattenartige Anordnung bildet, so dass die Mehrzahl von Untereinheiten bei geringem Platzbedarf wiederum zwei oder dreidimensional anordenbar sind, ohne dass diese Anordnung notwendigerweise regelmäßig sein müsste.

Um zum einen die Erfassung von Messwerten durch die Sensoren und die Betätigung der Aktoren steuern zu können, aber auch die Autonomie der Untereinheiten und die Übernahme von Funktionen anderer Untereinheiten im Fall von deren Ausfall gewährleisten zu können, ist bei einer anderen Ausführung des erfindungsgemäßen Regelkreissystems eine Steuereinheit des Steuermittels an einer Untereinheit jeweils mit wenigstens einem Mikrocontroller versehen. Eine Übernahme von Funktionen beispielsweise einer oder mehrerer benachbarter Untereinheiten kann darin etwa bestehen, dass diese ganz ersetzt wird bzw. werden oder die Kontrollparameter benachbarter Komponenten angepasst werden. Es sind aber auch andere Übernahmemaßnahmen vorstellbar, etwa können über Steuerung mittels einer Untereinheit an dem System ohne Eingriff von außen Teile ein- und ausgeschaltet werden. Dies kann anhand von Belastbarkeitsüberlegungen (um etwa Komponenten weniger zu strapazieren) oder abhängig von mittels der Sensoren festgestellten, sich ändernden Umgebungsbedingungen, etwa der Strömungsbedingungen, geschehen. Weiter ist es auch denkbar, dass durch die Untereinheit lediglich die eigenen Sensor-/ Aktor-Modellparameter angepasst werden, um die Funktionalität einer vollständig fehlerhaften Einheit zu ersetzen und zu kompensieren. Abhängig von der Art eines auftretenden Fehlers kann anhand der Zusammensetzung von Untereinheiten und der Art und Weise der Kommunikation sich eine Anpassung auch auf den Datenfluss beziehen, oder darauf, dass die Kontrolle über mit der fehlerhaften Untereinheit gemeinsamen Komponenten übernommen wird.

In vorteilhaften Ausführungen des erfindungsgemäßen Regelkreissystems kann der Mikrocontroller zunächst, um seinen Aufgaben gerecht zu werden, zumindest ein Steuerglied und wenigstens einen Anschluss an einen externen Kommunikationspfad haben, so dass die Regelung übernommen und mit anderen Einheiten des Regelkreissystem kommuniziert werden kann. In weiteren vorteilhafte Ausführungen kann der jeweilige Mikrocontroller wenigstens ein Erfassungs- und Steuerglied für den wenigstens einen zugeordneten Sensor aufweisen und/oder ein Berechnungs- und Steuerglied für den wenigstens einen zugeordneten Aktor aufweisen und /oder ein Plausibilitätsprüfglied aufweisen.

Durch Gebrauch eines passenden Kommunikationskanals, der es den Einheiten ermöglicht, untereinander zu kommunizieren, können die Einheiten den Status ihrer Miteinheiten in ihrer Umgebung kennen. In dem Fall, dass eine Einheit versagt oder ein Verhalten außerhalb ihrer Spezifikationen zeigt, sollen zumindest die benachbarten Einheiten davon unterrichtet werden, so dass sie darauf reagieren können. Um eine effektive Kommunikation zwischen den miteinander kommunizierenden Untereinheiten des erfindungsgemäßen Regelkreissystems gewährleisten zu können, ist es bei einer Weiterbildung vorgesehen, den Kommunikationspfad, an welchen eine Steuereinheit über ihren Mikrocontroller jeweils an das Regelkreissystem angeschlossen ist, durch einen Bus, insbesondere einen Feldbus, zu bilden, so dass die Übertragung von Daten zwischen den Untereinheiten durch eine vom jeweiligen Sender bzw. Empfänger unabhängige, vereinheitlichte Kommunikationsschicht, ein Protokoll, übernommen wird. Um die Sensoren und Aktoren der Untereinheiten in die Kommunikation in einfacher Weise einbinden zu können, ist bei einer Weiterbildung zweckmäßigerweise der Bus durch ein PROFIBUS-System, ein Interbus-System, ein ASI-System, ein PROFINET-System, EtherCAT-System oder ein drahtloses Übertragungssystem gebildet. Die Eignung anderer Busse ist durch die vorstehende Aufzählung nicht beschränkt.

Um das Regelkreissystem in die Lage zu versetzen, flexibel auf Ausfälle einer oder mehrerer Untereinheiten reagieren zu können, müssen die Untereinheiten in geeigneter, möglichst redundanter Art und weise miteinander kommunizieren können. Hierzu kommunizieren bei einer weiteren Ausführungsform des Regelkreissystems die Untereinheiten über den Kommunikationspfad mittels eines Protokolls, welches eine Information über den Status jeder der Untereinheiten zumindest zum jeweiligen Kommunikationszeitpunkt umfasst.

Die Kommunikation zwischen den Untereinheiten ist dabei in topologischer Hinsicht auf eine Art und Weise organisiert, die multiple Signalpfade ermöglicht. Dies sichert den Umstand ab, dass ein Ausfall in einem bestimmten Pfad nicht das Verbreiten von Information über das gesamte System blockiert.

Zweckmäßiger Weise sind hierbei die Untereinheiten über das verwendete Protokoll miteinander synchronisierbar oder synchronisiert, so dass miteinander kommunizierende Untereinheiten anhand einer Art Zeitstempel erkennen, auf welchen Zeitpunkt sich eine Statusmeldung einer Untereinheit bezieht.

Im Falle einer Fehlfunktion einer oder mehrerer Untereinheiten sollen andere Untereinheiten bzw. deren Steuereinheiten die Funktionen des fehlerhaften Systems dadurch übernehmen, dass sie es ersetzen, oder sie die Kontrollparameter von Nachbarkomponenten anpassen, um die Effekte der fehlenden Untereinheit zu kompensieren.
Hierfür kann bei einer weiteren Ausführung des erfindungsgemäßen Regelkreissystems jede der Untereinheiten mit einem Prüfprotokoll versehen sein, welches auf einen Wechsel in der Statusinformation wenigstens einer anderen Untereinheit reagiert und an der betreffenden anderen Untereinheit implementierte Steuerungsparameter entsprechend anpasst. So kann eine Steuereinheit beispielsweise dafür vorgesehen sein, lediglich auf Fehlfunktionen von benachbarten Untereinheiten zu reagieren und eine Parameteränderung mit den gemeinsam benachbarten Untereinheiten auszuhandeln. In einer anderen vorteilhaften Weiterbildung, die insbesondere Vorteile bei der Skalierbarkeit hin zu einer größeren Anzahl von Einheiten aufweist, kann jede der Untereinheiten dazu eingerichtet sein, ein Versagen zumindest einer benachbarten Untereinheit, insbesondere jeder Untereinheit des Regelkreissystems, zu erfassen. Da die Untereinheiten jeweils den Status der anderen Untereinheiten kontrollieren, wird auf jeder Untereinheit eine Art Gesundheitsüberwachungsprotokoll des Gesamtsystems gefahren, das auf Wechsel im Status anderer Untereinheiten reagiert und deren Systemsteuerungsparameter dementsprechend anpassen kann. Außerdem kann ein Versagen der Einheit durch Fehlen der Protokollaktualisierung oder eine andere Art von Marker mitgeteilt werden.

Die Aufgabe wird auch gelöst durch ein Verfahren zum Betrieb eines Regelkreissystems zur Beeinflussung wenigstens einer Prozessgröße, bei dem das Regelkreissystem in eine Mehrzahl von Untereinheiten aufgegliedert wird, die jeweils mit wenigstens einem Sensor, einem Aktor und einer Steuereinheit versehen werden, und dass eine Mehrzahl der Untereinheiten, insbesondere jede der Untereinheiten dazu eingerichtet wird, ein eigenständiges Regelkreissystem zu betreiben.
Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird nachstehend anhand von Ausführungsbeispielen in der Zeichnung näher erläutert. Es zeigen in teilweise schematisierter Darstellung
- Fig.1: eine schematische Darstellung eines ersten Ausführungsbeispiels eines erfindungsgemäßen Regelkreissystems mit einer Mehrzahl von Untereinheiten, die jeweils mit einem Aktor und zwei Sensoren versehen sind;
- Fig.2: eine schematische Darstellung einer Untereinheit eines weiteren Ausführungsbeispiels des Regelkreissystem mit detaillierter Darstellung der Steuereinheit; und
- Fig.3a,b: zwei schematische Darstellungen mit unterschiedlichen, zwischen den Untereinheiten realisierbaren Kommunikationspfaden, wobei zum einen jede Einheit mit jeder anderen Untereinheit über einen Hauptbus kommuniziert (Fig.3a), während zum anderen die Kommunikation nur zwischen benachbarten Untereinheiten gestattet ist (Fig.3b).

In allen Figuren sind gleiche bzw. funktionsgleiche Elemente und Vorrichtungen - sofern nichts Anderes angegeben ist - mit denselben Bezugszeichen versehen worden.

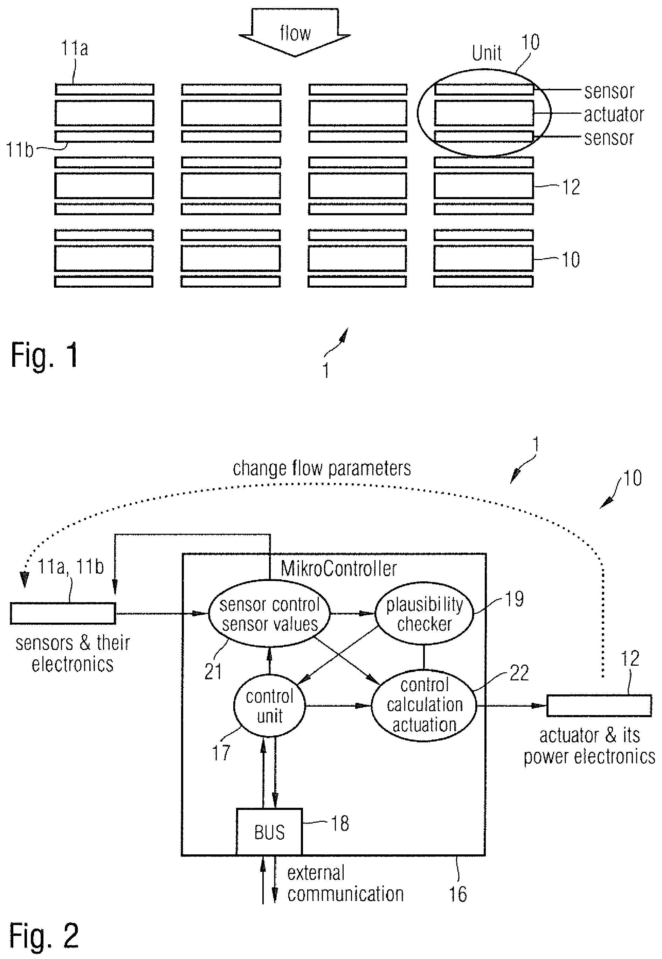

Beispielhaft zeigt die Fig.1 ein im Ganzen mit 1 bezeichnetes Regelkreissystem mit einer Mehrzahl von Sensoren und Aktoren, bei welchem eine Untereinheit 10 jeweils durch zwei Sensoren 11a, 11b und einen Aktor 12 definiert wird, wobei die Steuereinheiten 20 der Untereinheiten 10 in dieser Darstellung der besseren Übersichtlichkeit halber weggelassen wurden. Das Regelkreissystem 1 wird dabei mit seinen Untereinheiten 10 und bei diesen wiederum mit deren ersten Sensoren 11a durch die mittels des Pfeils 5 repräsentierten Strömung angeflutet, und ein durch eine Messgröße repräsentierter Strömungsstatus gemessen. Ein durch Betätigung des Aktors 12 geänderter Strömungsstatus kann anschließend anhand des zweiten der jeweiligen Untereinheit 10 zugeordneten Sensors 11b erfasst werden.

In der Fig.2 sind in diesem Zusammenhang die Hauptbestandteile der Untereinheiten 10 eines Regelkreissystems 1 gezeigt. Dabei erkennt man an der für den Betrachter linken Seite der Darstellung zunächst die Sensoren 11a, 11b und ihre elektronischen Kontrollschaltkreise, mittig die mit einem Mikrocontroller 16 ausgebildete Steuereinheit 20 mit ihren Steuergliedern und Kommunikationsmitteln sowie für den Betrachter rechts in der Darstellung schließlich den eigentlichen Aktor 12 mit dessen notwendiger Stromversorgung sowie dessen Steuerelektronik. Der Mikrocontroller ist in der vorliegenden Darstellung mit einem Erfassungs- und Steuerglied 21 für die zugeordneten Sensoren 11a, 11b versehen, mit denen ein Signalaustausch stattfindet. Weiter erkennt man ein Steuerglied 17 für die allgemeinen Berechnungen und Koordination seiner Aktionen mit anderen Untereinheiten 10, und wenigstens einen Anschluss 18 an einen externen Kommunikationspfad. Schließlich ist der Mikrocontroller 16 der Steuereinheit 20 mit einem Berechnungs- und Steuerglied 22 für den zugeordneten Aktor 12 versehen und weist ein Plausibilitätsprüfglied 19 auf.

Die Darstellung der Fig.2 zeigt dabei, dass eine Untereinheit 10 deutlich komplexer sein kann, als es die Fig.1 zunächst vermuten ließe. In der Fig.2 wird nämlich ein Eingangssignal am Sensor 11a, 11b durch den Mikrokontroller 16 mit dem Erfassungs- und Steuerglied 21 in Echtzeit erhalten, der Mikrocontroller 16 bestimmt dann, basierend auf der Sensorinformation, den Strömungsstatus und legt, falls vom Sensorschaltkreis verlangt, die Sensorsteuerung fest. Die Strömungsstatusinformation wird dann dem Steuerungsberechnungsalgorithmus des mit einem Berechnungs- und Steuerglieds 22 des Aktors 12 und einer Plausibilitätskontrolle durch das Plausibilitätsprüfglied 19 übergeben, die nach Fehlerkennzeichen sucht. Der Kontrollalgorithmus bestimmt dann die günstigste, ausreichende Art und die minimale Stärke des Ausgangssignals für den Aktor 12, um die in der gegebenen Situation günstigste Strömung zu liefern.Das Steuerglied 17 als Hauptbestandteil der Steuereinheit 20 bzw. von deren Mikrocontroller 16 ist in der Lage, die Parameter innerhalb des Sensor/Aktor-Modells (etwa durch die Einführung eines Dämpfungs- oder Gewichtungsparameters) zu modifizieren.

Falls die Sensoren 11a, 11b einen eigenen Regelungsberechnungsschaltkreis benötigen, kann dies ebenfalls mittels des Mikrocontrollers 16 etabliert werden. Wenn nicht ständig, so zumindest in regelmäßigen Abständen werden also die Sensordaten und die Regelungsleistung mittels des Plausibilitätsprüfungsglieds 19 überprüft, der Rückmeldung über den Status der Untereinheit 10 gibt. Die Kommunikation mit anderen Einheiten 10 findet dann mittels der Steuereinheit 16 über einen Bus und ein passendes Protokoll statt, welches auch den Status jedes Sensors 11a, 11b enthält.

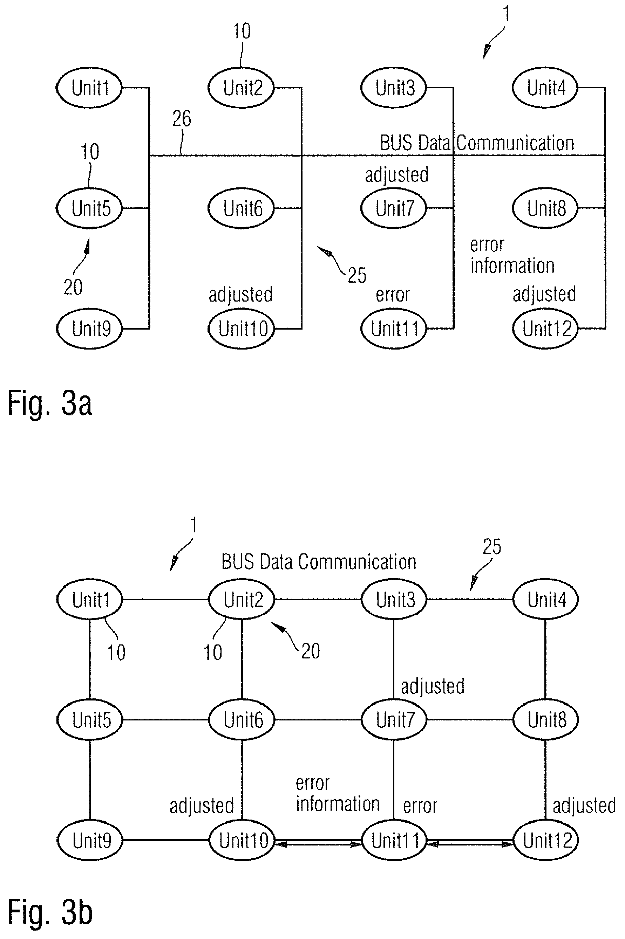

Die Fig.3a, 3b zeigen verschiedene Realisierungen des Kommunikationsbusses zur Kommunikation zwischen den Untereinheiten 10 mit ihren Steuereinheiten 20. Im oberen Diagramm gibt es einen Hauptbus 26 während das Protokoll die ganze Statusinformation enthält. Falls eine Untereinheit 10 ausfällt ist, in dem oberen Diagramm der Fig.3a etwa die Einheit mit der Ordnungsnummer 11, wird diese Information zwar allen anderen Untereinheiten zur Verfügung gestellt, es sind aber lediglich die Untereinheiten 10 mit den Ordnungsnummern 7,10,12 sind an Anpassungen beteiligt.
In der Fig.3a sind alle Untereinheiten 10 durch einen gemeinsamen Bus 25 verbunden. Falls eine Untereinheit 10 ein fehlerhaftes Verhalten zeigt, wie dort die Einheit mit der Ordnungsnummer 11, kann das Modell der anderen Untereinheiten 10 angepasst werden. So braucht bei dem vorliegenden Beispiel etwa die Einheit mit der Ordnungsnummer 7 ein größeres Ausgangssignal, um den Effekt der Zusammenwirkung mit der Einheit mit der Ordnungsnummer 3 zu steigern. Auch die Untereinheiten 10 mit den Ordnungsnummern 10 und 12 und auch andere Untereinheiten 10 können abhängig vom Aktor 12 und der Art der gegenwärtigen Strömung angepasst werden. Für den Fall, dass der Bus 25 einen Master zur Zeitsynchronisation aller Untereinheiten 10 braucht, kann dieser zufällig unter allen Untereinheiten 10 bestimmt werden. Falls dann der Master in einen Fehlerzustand geht, kann eine andere zufällige Untereinheit 10 übernehmen.

Im unteren Diagramm der Fig.3b wird ein anderer Ansatz gezeigt, bei dem die Buskommunikation nur mit benachbarten Sensoren möglich ist und im Falle eines Ausfalls etwa der Untereinheit 11 ist, nur die umliegenden Untereinheiten hiervon wissen und Gegenmaßnahmen treffen. Die Realisierung der Fig.3b zeigt demnach einen Bus 25, bei dem nur benachbarte Sensoren mit einander kommunizieren.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.
Denn das Konzept unabhängiger Untereinheiten 10 mit einer Sensor/Aktor-Mikrocontroller-Kombination kann auf eine Vielzahl anderer Anwendungen wie beispielsweise strukturelle Messungen ausgedehnt werden und ist daher nicht auf Strömungsregelungsanwendungen beschränkt.

Das Konzept erlaubt ein einfaches Ersetzen einzelner fehlerhafter Untereinheiten 10 während der Instandhaltung und die Ausdehnung auf eine größere Anzahl von Untereinheiten 10 wird lediglich von der Art des Busses 25 begrenzt. Eine Vergrößerung der Anzahl von Untereinheiten 10 kann auch die allgemeine Zuverlässigkeit eines Systems 1 steigern, daher stärkt das in dieser Erfindung vorgeschlagene Konzept die Belastbarkeit eines Systems 1 auf verschiedene Weise und ist daher sehr vielversprechend für die Anwendungen von Regelungssystemen mit einer Vielzahl von Komponenten, die in selbstähnliche Untereinheiten 10 aufgegliedert werden können.

Die vorstehend beschriebene Erfindung betrifft demnach ein Regelkreissystem 1 zur Beeinflussung wenigstens einer Prozessgröße, mit einer Mehrzahl von Sensoren 11a, 11b, die jeweils zumindest eine Messgröße erfassen, mit einer Mehrzahl von Aktoren 12, die jeweils wenigstens eine Stellgröße manipulieren, wobei den Sensoren 11a, 11b und Aktoren 12 jeweils elektronische Schaltkreise zur Ansteuerung zugeordnet sind, sowie mit wenigstens einem Steuermittel, welches mit wenigstens einer Steuereinheit 20 die Mehrzahl von Sensoren 11a, 11b und Aktoren 12 jeweils ansteuert und/oder koordiniert.
Um bei einer Regelstrecke mit mehreren Sensoren 11a, 11b und Aktoren 12, wie sie zur Strömungsregelung eingesetzt wird, Zuverlässigkeit und Belastbarkeit zu steigern, die allgemeine Komplexität zu vermindern und die Instandhaltung zu erleichtern, wird vorgeschlagen, das Regelkreissystem 1 in eine Mehrzahl von Untereinheiten 10 zu gliedern, die jeweils mit wenigstens einem Sensor 11a, 11b, wenigstens einem Aktor 12 und wenigstens einer Steuereinheit 20 versehen sind, und dass eine Mehrzahl der Untereinheiten 10, insbesondere jede der Untereinheiten 10 dazu eingerichtet ist, ein Regelkreissystem 1 zu betreiben.

Dabei wird die Gesamtsicherheit des Systems 1 durch identische Untereinheiten 10, die mit Blick auf den Status des Gesamtsystems 1 frei anpassbar sind, gesteigert. Jede Untereinheit 10 kann hierbei lokal entsprechend der herrschenden Strömungsbedingungen der Eingangsströmung und des Status der umgebenden Untereinheiten 10 in ihrer Nachbarschaft zur Flusskontrolle eingestellt werden. Weiter können Instandhaltung und Reparatur für ein System 1 aus denselben Untereinheiten 10 reduziert werden, da kaputte Untereinheiten 10 als Einheit getauscht werden können. Außerdem ist es einfacher, das System 1 in Richtung eines größeren aktiven Netzwerks zur Strömungskontrolle auszubauen, da hierbei keine Beschränkungen hinsichtlich einer Zentralsteuerungseinheit bestehen, sondern nur mit Blick auf die Fähigkeiten zur Buskommunikation des implementierten Protokolls. Nicht zuletzt sind Selbsttest- und Überwachungseigenschaften über die Netzkommunikation implementiert, wobei das Erfindungsprinzip auf viele andere Regelkreisanwendungen außer der Flusskontrolle anwendbar ist.

### Bezugszeichen

- 1: Regelkreissystem
- 10: Untereinheit
- 11a,b: Sensor
- 12: Aktor
- 16: Mikrocontroller
- 17: Steuerglied
- 18: Anschluss an Kommunikationspfad
- 19: Plausibilitätsprüfglied
- 20: Steuereinheit
- 21: Erfassungs- und Steuerglied
- 22: Berechnungs- und Steuerglied
- 25: Bus
- 26: Hauptbus

## Patentansprüche

1. Regelkreissystem (1) zur Beeinflussung wenigstens einer Prozessgröße, mit einer Mehrzahl von Sensoren (11a, 11b), die jeweils zumindest eine Messgröße erfassen, mit einer Mehrzahl von Aktoren (12), die jeweils wenigstens eine Stellgröße manipulieren, wobei den Sensoren (11a, 11b) und Aktoren (12) jeweils elektronische Schaltkreise zur Ansteuerung zugeordnet sind, sowie mit wenigstens einem Steuermittel, welches mit wenigstens einer Steuereinheit (20) die Mehrzahl von Sensoren (11a, 11b) und Aktoren (12) jeweils ansteuert und/oder koordiniert, wobei das Regelkreissystem (1) in eine Mehrzahl von Untereinheiten (10) gegliedert ist, die jeweils mit wenigstens einem Sensor (11a, 11b), wenigstens einem Aktor (12) und wenigstens einer Steuereinheit (20) versehen sind, und dass eine Mehrzahl der Untereinheiten (10), insbesondere jede der Untereinheiten (20), dazu eingerichtet ist, ein Regelkreissystem (1) zu betreiben.

2. Regelkreissystem nach Anspruch 1, **dadurch gekennzeichnet, dass** alle Sensoren (11a, 11b), Aktoren (12) und Steuereinheiten (20) des Regelkreissystems (1) auf Untereinheiten (10) verteilt sind.

3. Regelkreissystem nach Anspruch 1 oder 2, **dadurch gekennzeichnet, dass** das Regelkreissystem (1) mit einer Mehrzahl identischer Untereinheiten (10) versehen ist, die insbesondere in Art einer zwei- oder dreidimensionalen Matrix angeordnet sind.

4. Regelkreissystem nach einem der vorhergehenden Ansprüche, **dadurch gekennzeichnet, dass** eine Untereinheit (10) mit zwei Sensoren (11a, 11b), einem Aktor (12) und einer Steuereinheit (20) versehen ist.

5. Regelkreissystem nach einem der vorhergehenden Ansprüche, **dadurch gekennzeichnet, dass** eine Untereinheit (10) jeweils wenigstens eine Sensor-Aktor-Anordnung aufweist, die eine ebene, plattenartige Anordnung bildet.

6. Regelkreissystem nach einem der vorhergehenden Ansprüche, **dadurch gekennzeichnet, dass** eine Steuereinheit (20) des Steuermittels jeweils mit wenigstens einem Mikrocontroller (16) versehen ist.

7. Regelkreissystem nach Anspruch 6, **dadurch gekennzeichnet, dass** der Mikrocontroller (16) zumindest ein Steuerglied (17) und wenigstens einen Anschluss (18) an einen externen Kommunikationspfad aufweist.

8. Regelkreissystem nach Anspruch 6 oder 7, **dadurch gekennzeichnet, dass** der Mikrocontroller (16) wenigstens ein Erfassungs- und Steuerglied (21) für den wenigstens einen zugeordneten Sensor (11a, 11b) aufweist und/oder ein Berechnungs- und Steuerglied (22) für den wenigstens einen zugeordneten Aktor (129 aufweist und /oder wenigstens ein Plausibilitätsprüfglied (19) aufweist.

9. Regelkreissystem nach Anspruch 7 oder 8, **dadurch gekennzeichnet, dass** der Kommunikationspfad, an welchen eine Steuereinheit (20) über ihren Mikrocontroller (16) jeweils an das Regelkreissystem anschließbar oder angeschlossen ist, durch einen Bus (25, 26), insbesondere einen Feldbus, gebildet ist.

10. Regelkreissystem nach Anspruch 9, **dadurch gekennzeichnet, dass** der Bus (25, 26) durch ein PROFIBUS-System, ein Interbus-System, ein ASI-System, ein PROFINET-System, EtherCAT-System oder ein drahtloses Übertragungssystem gebildet ist.

11. Regelkreissystem nach einem der vorhergehenden Ansprüche, **dadurch gekennzeichnet, dass** die Untereinheiten (10) über den Kommunikationspfad mittels eines Protokolls kommunizieren, welches eine Information über den Status jeder der Untereinheiten (10) zumindest zum jeweiligen Kommunikationszeitpunkt umfasst.

12. Regelkreissystem nach einem der vorhergehenden Ansprüche, **dadurch gekennzeichnet, dass** je zweier Untereinheiten (10) über eine Mehrzahl von Kommunikationspfaden miteinander kommunizieren und/oder die Untereinheiten über das verwendete Protokoll miteinander synchronisierbar oder synchronisiert sind.

13. Regelkreissystem nach einem der vorhergehenden Ansprüche, **dadurch gekennzeichnet, dass** jede der Untereinheiten (10) mit einem Prüfprotokoll versehen ist, welches auf einen Wechsel in der Statusinformation wenigstens einer anderen Untereinheit (10) reagiert und an der betreffenden anderen Untereinheit (10) implementierte Steuerungsparameter entsprechend anpasst.

14. Regelkreissystem nach einem der vorhergehenden Ansprüche, **dadurch gekennzeichnet, dass** jede der Untereinheiten (10) dazu eingerichtet ist, ein Versagen zumindest einer benachbarten Untereinheit (10), insbesondere jeder Untereinheit (10) des Regelkreissystems (1) zu erfassen.

15. Verfahren zum Betrieb eines Regelkreissystems (1) zur Beeinflussung wenigstens einer Prozessgröße, mit einer Mehrzahl von Sensoren (11a, 11b), mittels derer zumindest eine Messgröße erfasst wird, mit einer Mehrzahl von Aktoren (12), durch die jeweils wenigstens eine Stellgröße manipuliert wird, wobei den Sensoren (11a, 11b) und Aktoren (12) jeweils elektronische Schaltkreise zur Ansteuerung zugeordnet werden, sowie mit wenigstens einem Steuermittel, durch deren wenigstens eine Steuereinheit (20) die Mehrzahl von Sensoren (11a, 11b) und Aktoren (12) jeweils angesteuert und/oder koordiniert werden, wobei das Regelkreissystem (1) in eine Mehrzahl von Untereinheiten (10) aufgegliedert wird, die jeweils mit wenigstens einem Sensor (11a, 11b), einem Aktor (12) und einer Steuereinheit (20) versehen werden, und wobei eine Mehrzahl der Untereinheiten (10), insbesondere jede der Untereinheiten (10) dazu eingerichtet wird, ein Regelkreissystem (1) zu betreiben.
